# EUROPEAN PATENT APPLICATION

(11) **EP 2 301 990 A1**
(43) Date of publication of application: **30.03.2011**
(21) Application number: 09794549.7
(22) Date of filing: 09.07.2009
(51) Int. Cl.: C08G 77/60, C08G 77/08, C08G 79/00

(54) **POLYMER MANUFACTURING METHOD**

(30) Priority: 11.07.2008 JP 2008181608
(71) Applicant: Japan Science And Technology Agency, Kawaguchi-shi Saitama 332-0012 (JP); National University Corporation Kanazawa University, Kanazawa-shi, Ishikawa 920-1164 (JP); JSR Corporation, Minato-ku Tokyo 105-0021 (JP)
(72) Inventor: SHIMODA, Tatsuya, Nomi-shi Ishikawa 923-1211 (JP); KAWAJIRI, Ryo, Nomi-shi Ishikawa 923-1205 (JP); ISOBE, Kiyoshi, Kanazawa-shi Ishikawa 920-1164 (JP); NAKAI, Hidetaka, Kanazawa-shi Ishikawa 920-1164 (JP); MATSUKI, Yasuo, Tokyo 105-0021 (JP)
(74) Representative: TBK-Patent
(86) International application number: PCT/JP2009/062841
(87) International publication number: WO 2010/005106

(57) **Abstract**

A polymer production process comprising reacting a compound represented by the following formula (1) in the presence of a binuclear metal complex represented by the following formula (2).

R₄₋ₙMHₙ (1)

(in the formula (1), R is a monovalent organic group, M is a silicon atom or a germanium atom, and n is 2 or 3.)

[CpM(µ-CH₂)]₂ (2)

(in the formula (2), Cp is a cyclopentadienyl-based ligand, M is a metal atom selected from Rh and Ir, and the bond between M's is a double bond.)

## Description

### TECHNICAL FIELD

The present invention relates to a polymer production process.

### BACKGROUND ART

Heretofore, a silica (SiO₂) film formed by a vacuum process such as CVD (Chemical Vapor Deposition) has often been used as an interlayer insulating film for use in semiconductor devices. A coat-type insulating film comprising a hydrolyzed product of a tetraalkoxysilane as the main ingredient, called "SOG (Spin on Glass) film", has recently been used so as to form a more uniform interlayer insulating film. An interlayer insulating film having a low dielectric constant and comprising a polyorganosiloxane as the main ingredient, called "organic SOG", has been developed along with a trend toward the high integration of semiconductor devices.

JP-A 2001-55444 discloses a process for producing a silicon polymer by reacting a tetrahalogenated silicon and a silane compound having a monovalent organic group with metal lithium, metal magnesium or both of them and reducing the obtained reaction product with MgH₂. However, this process has a problem that the operation is complicated.

JP-B 7-17753 discloses a process for obtaining a polymer by polymerizing phenylsilane in the presence of bis(pentamethylcyclopentadienyl)(bis(trimethylsilyl) methyl) neodymium. However, this process has a problem that the reaction temperature must be made high as bis (pentamethylcyclopentadienyl) (bis (trimethylsilyl) methyl)neodymium as a catalyst has low activity.

### DISCLOSURE OF THE INVENTION

It is therefore an object of the present invention to provide a polymer production process capable of obtaining a silicon polymer or a germanium polymer under simple and mild conditions.

The inventors of the present invention have conducted intensive studies to attain the above object and have found that a specific metal complex catalyst has such high activity in the polymerization reaction of a specific silicon compound and a specific germanium compound that a silicon polymer and a germanium polymer can be obtained even under mild conditions such as room temperature and 1 atm., respectively. The present invention has been accomplished based on this finding.

That is, according to the present invention, the above object and advantage of the present invention are attained by a polymer production process comprising reacting a compound represented by the following formula (1) in the presence of a binuclear metal complex represented by the following formula (2).

R₄₋ₙMHₙ (1)

(in the formula (1), R is a monovalent organic group, M is a silicon atom or a germanium atom, and n is 2 or 3.)

[CpM(µ-CH₂)]₂ (2)

(in the formula (2), Cp is a cyclopentadienyl-based ligand, M is a metal atom selected from Rh and Ir, and the bond between M's is a double bond.)

### Brief Description of the Drawings

Fig. 1 is an IR spectral chart of a polymer obtained in Example 1;
Fig. 2 is a GPC spectral chart of the polymer obtained in Example 1; and
Fig. 3 is a ¹H-NMR spectral chart of the polymer obtained in Example 1.

### DESCRIPTION OF EMBODIMENTS

The present invention will be described in detail hereinunder.

The polymer production process of the present invention comprises reacting a compound represented by the above formula (1) in the presence of a binuclear metal complex represented by the above formula (2).

Examples of the monovalent organic group represented by R in the above formula (1) include a linear or branched aliphatic group having 1 to 10 carbon atoms, alicyclic group having 3 to 20 carbon atoms, aryl group having 6 to 20 carbon atoms, aralkyl group having 6 to 20 carbon atoms and heteroaromatic group having 5 to 20 members.

The above linear or branched aliphatic group having 1 to 10 carbon atoms is, for example, an alkyl group, alkenyl group or alkynyl group having 1 to 10 carbon atoms. Specific examples of the aliphatic group include alkyl groups such as methyl group, ethyl group, n-propyl group, isopropyl group, n-butyl group, isobutyl group, t-butyl group, n-pentyl group, isopentyl group, neopentyl group and texyl group; alkenyl groups such as propenyl group, 3-butenyl group, 3-pentenyl group and 3-hexenyl group; and alkynyl groups such as propagyl group, 3-methylpropagyl group and 3-ethylpropagyl group.

The above alicyclic group having 3 to 20 carbon atoms is, for example, a cycloalkyl group, cycloalkenyl group or bicycloalkyl group having 3 to 20 carbon atoms. Specific examples of the alicyclic group include cycloalkyl groups such as cyclopropyl group, cyclobutyl group, cyclopentyl group, cyclohexyl group and norbornyl group; cycloalkenyl groups such as cyclohexenyl group, cyclooctenyl group and cyclododecenyl group; and bicycloalkyl groups such as bicyclooctyl group, bicycloheptyl group, norbornyl group and adamantyl group.

Examples of the above aryl group having 6 to 20 carbon atoms include phenyl group, tolyl group, xylyl group, α-naphthyl group and β-naphthyl group.

Examples of the above aralkyl group having 6 to 20 carbon atoms include benzyl group, phenethyl group, phenylpropyl group and phenylbutyl group.

Examples of the heteroaromatic group having 5 to 20 members include α-thienyl group and β-thienyl group.

R in the above formula (1) is preferably a t-butyl group, hexyl group, phenethyl group or norbornyl group from the viewpoints of polymerization reactivity and the stability of the formed polymer.

Examples of the compound of the above formula (1) in which M is a silicon atom include methylsilane, ethylsilane, n-propylsilane, isopropylsilane, n-butylsilane, t-butylsilane, cyclohexylsilane, phenetylsilane, 2-norbornylsilane, phenylsilane, methylsilane, ethylsilane, n-propylsilane, isopropylsilane, n-butylsilane, t-butylsilane, cyclohexylsilane, phenetylsilane, 2-norbornylsilane, phenylsilane, methylsilane, ethylsilane, n-propylsilane, isopropylsilane, n-butylsilane, t-butylsilane, cyclohexylsilane, phenetylsilane, 2-norbornylsilane, phenylsilane, dimethylsilane, diethylsilane, di-n-propylsilane, diisopropylsilane, di-n-butylsilane, di-t-butylsilane, dicyclohexylsilane, diphenetylsilane, di-2-norbornylsilane, diphenylsilane, dimethylsilane, diethylsilane, di-n-propylsilane, diisopropylsilane, di-n-butylsilane, di-t-butylsilane, dicyclohexylsilane, diphenetylsilane, di-2-norbornylsilane, diphenylsilane, dimethylsilane, diethylsilane, di-n-propylsilane, diisopropylsilane, di-n-butylsilane, di-t-butylsilane, dicyclohexylsilane, diphenetylsilane, di-2-norbornylsilane and diphenylsilane. Out of these, phenylsilane, t-butylsilane and methylsilane are particularly preferred. They may be used alone or in combination of two or more.

Examples of the compound of the formula (1) in which M is a germanium atom include methylgermanium, ethylgermanium, n-propylgermanium, isopropylgermanium, n-butylgermanium, t-butylgermanium, cyclohexylgermanium, phenetylgermanium, 2-norbornylgermanium, phenylgermanium, methylgermanium, ethylgermanium, n-propylgermanium, isopropylgermanium, n-butylgermanium, t-butylgermanium, cyclohexylgermanium, phenetylgermanium, 2-norbornylgermanium, phenylgermanium, methylgermanium, ethylgermanium, n-propylgermanium, isopropylgermanium, n-butylgermanium, t-butylgermanium, cyclohexylgermanium, phenetylgermanium, 2-norbornylgermanium, phenylgermanium, dimethylgermanium, diethylgermanium, di-n-propylgermanium, diisopropylgermanium, di-n-butylgermanium, di-t-butylgermanium, dicyclohexylgermanium, diphenetylgermanium, di-2-norbornylgermanium, diphenylgermanium, dimethylgermanium, diethylgermanium, di-n-propylgermanium, diisopropylgermanium, di-n-butylgermanium, di-t-butylgermanium, dicyclohexylgermanium, diphenetylgermanium, di-2-norbornylgermanium and diphenylgermanium. Out of these, phenylgermanium, t-butylgermanium and methylgermanium are particularly preferred. They may be used alone or in combination of two or more. A compound of the formula (1) in which M is a silicon atom and a compound of the formula (1) in which M is a germanium atom may be used in combination. In this case, a silicon-germanium copolymer is obtained as the polymer. The ratio of the compound of the formula (1) in which M is a silicon atom and the compound of the formula (1) in which M is a germanium atom is suitably set according to application purpose.

The binuclear metal complex used in the process of the present invention is a complex represented by the above formula (2). This complex has high activity and is particularly effective in the polymer production process of the present invention. The reason for this is assumed to be that the electron density between metal atoms is high due to the double bond between M's with the result of strong reducing power.

The cyclopentadienyl-based ligand in the above nuclear metal complex is, for example, a cyclopentadienyl ligand or substituted cyclopentadienyl ligand represented by the following formula (3). 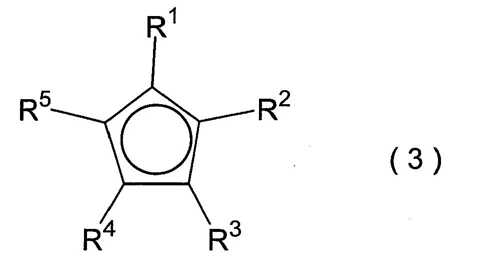 (in the formula (3), R¹, R², R³, R⁴ and R⁵ are each independently a hydrogen atom, alkyl group having 1 to 5 carbon atoms, aryl group having 6 to 14 carbon atoms, trifluoromethyl group or trialkylsilyl group having an alkyl group with 1 to 4 carbon atoms.)

Examples of the aryl group having 6 to 14 carbon atoms include phenyl group, naphthalenyl group and anthracenyl group.

The cyclopentadienyl-based ligand is preferably an alkyl-substituted cyclopentadienyl ligand of the above formula (3) in which 1 to 5 out of R¹, R², R³, R⁴ and R⁵ are alkyl groups having 1 to 5 carbon atoms and the rest are hydrogen atoms; an aryl-substituted cyclopentadienyl ligand of the above formula (3) in which 1 to 5 out of R¹, R², R³, R⁴ and R⁵ are aryl groups having 6 to 14 carbon atoms and the rest are hydrogen atoms; or a trialkylsilyl-substituted cyclopentadienyl ligand of the above formula (3) in which 1 to 5 out of R¹, R², R³, R⁴ and R⁵ are trialkylsilyl groups having an alkyl group with 1 to 4 carbon atoms and the rest are hydrogen atoms.

The binuclear metal complex used in the process of the present invention is preferably a complex represented by any one of the following formulas (4) to (7). 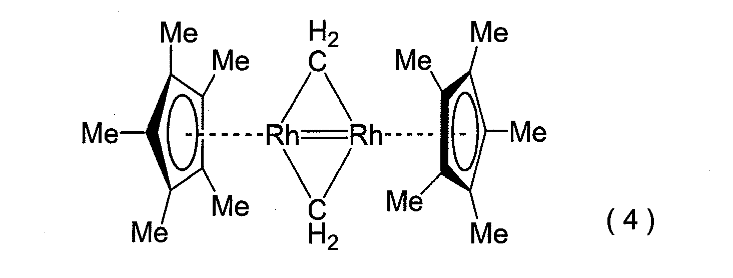 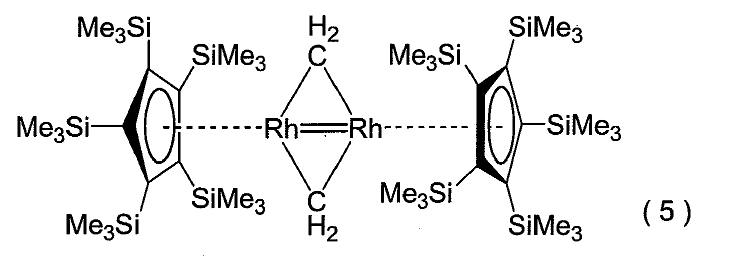 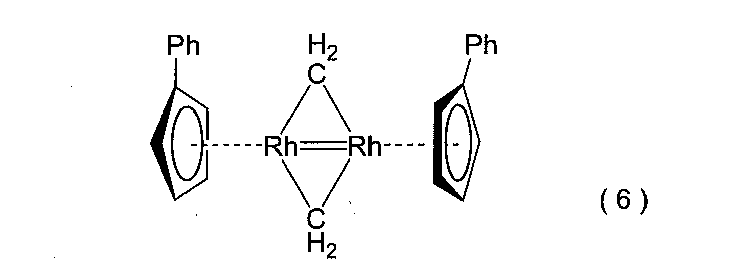 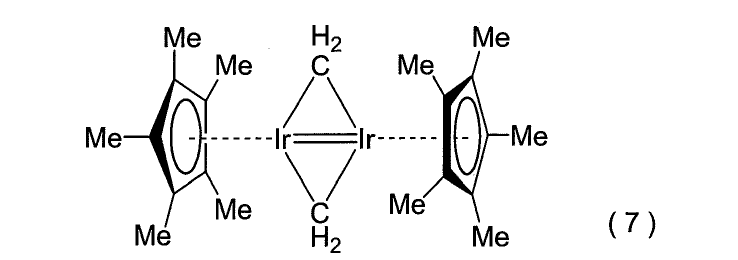 (Me in the formulas (4), (5) and (7) is a methyl group and Ph in the formula (6) is a phenyl group.)

The cyclopentadienyl-based ligand is particularly preferably a pentamethylcyclopentadienyl ligand (η⁵-C₅(CH₃)₅, to be also referred to as "Cp*" hereinafter) which is easily acquired and has high electron releasability from the viewpoints of further increasing the electron density chemically and maintaining the three-dimensional shape stability of a reaction field. Therefore, the binuclear metal complex used in the process of the present invention is particularly preferably a complex represented by the above formula (4) or (7).

To synthesize the above binuclear metal complex [CpM(µ-CH₂)]₂, for example, [CpM(µ-CH₂)CH₃]₂ is reacted with hydrogen chloride to obtain [CpM(µ-CH₂)Cl]₂ which is then reacted with Na.

The synthesis of the starting material [CpM(µ-CH₂)CH₃]₂ may be carried out in accordance with the method described in J. Chem. Soc., Dalton Trans., 1441-1447 (1983). The reaction between [CpM(µ-CH₂)Cl]₂ and hydrogen chloride may be carried out in accordance with the method described in J. Chem. Soc., Dalton Trans., 1215-1221 (1984). Stated more specifically, the temperature of a solution containing [CpM(µ-CH₂)CH₃]₂ is adjusted to 0 to 30°C, and hydrogen chloride is blown into the solution to carry out the reaction. As a solvent for this reaction may be used pentane, toluene, dichloromethane or chloroform. Then, Na is added to the obtained solution containing [CpM(µ-CH₂)Cl]₂ to carry out a reaction, a precipitate is removed, and a powder obtained by removing the solvent is purified by a suitable technique such as recrystallization to obtain the binuclear metal complex [CpM(µ-CH₂)]₂ of interest. As the solvent contained in the solution containing [CpM(µ-CH₂)Cl]₂ may be used benzene, toluene, hexane, pentene, cyclohexane or tetrahydrofuran.

In the process of the present invention, the compound represented by the above formula (1) is reacted in the presence of the above binuclear metal complex. This reaction is preferably carried out in a liquid state. When the starting material compound is liquid, the compound represented by the above formula (1) may be mixed with the binuclear metal complex in the absence of a solvent but the above reaction is preferably carried out in the presence of a suitable solvent. The solvent which can be used herein is not particularly limited as long as it dissolves the compound represented by the above formula (1) and does not react with the compound and the above binuclear metal complex. Examples of the solvent include hydrocarbon solvents such as n-pentane, n-hexane, n-heptane, n-octane, n-decane, dicyclopentane, benzene, toluene, xylene, durene, indene, tetrahydronaphthalene, decahydronaphthalene and squalane; ether solvents such as dipropyl ether, ethylene glycol dimethyl ether, ethylene glycol diethyl ether, ethylene glycol methyl ethyl ether, diethylene glycol dimethyl ether, diethylene glycol diethyl ether, diethylene glycol methyl ethyl ether, tetrahydrofuran, tetrahydropyran, 1,2-dimethoxyethane, bis(2-methoxyethyl)ether and p-dioxane; and polar solvents such as propylene carbonate, γ-butyrolactone, N-methyl-2-pyrrolidone, dimethyl formamide, acetonitrile and dimethyl sulfoxide. Out of these, hydrocarbon solvents and ether solvents are preferred, and hydrocarbon solvents are particularly preferred from the viewpoints of the solubility of the compound represented by the above formula (1) and the stability of the solution. These solvents may be used alone or in combination of two or more.

The amount of the solvent is such that the concentration of the compound represented by the above formula (1) in the obtained solution becomes preferably 0.1 to 99 mass%, more preferably 10 to 90 mass%.

The amount of the binuclear metal complex is preferably 5 x 10⁻⁴ to 5 x 10⁻¹ mol, more preferably 1 x 10⁻³ to 1 x 10⁻¹ mol based on 1 mol of the compound represented by the above formula (1) which is the raw material monomer. When the amount of the binuclear metal complex is smaller than 5 x 10⁻⁴ mol, the reaction may not proceed sufficiently and when the amount is larger than 5 x 10⁻¹ mol, the molecular weight of the obtained polymer may become too low.

The temperature for the reaction of the compound represented by the above formula (1) in the presence of the binuclear metal complex is preferably -30 to 100°C, more preferably 0 to 50°C. The pressure for the reaction is preferably 1 x 10⁴ to 1 x 10⁶ N/m², more preferably 5 x 10⁴ to 2 x 10⁵ N/m², particularly preferably 1 atm. (1.01 x 10⁴ N/m²). The reaction time is preferably 10 minutes to 50 hours, more preferably 1 to 30 hours.

The weight average molecular weight of the obtained polymer can be adjusted to any desired value according to its use purpose and use manner by suitably setting the concentration of the reaction solution, the amount of the binuclear metal complex, the reaction temperature, the reaction pressure and the reaction time. The weight average molecular weight of the polymer obtained by the process of the present invention can be set to, for example, 500 to 100,000, specifically 700 to 100,000. The weight average molecular weight is a value in terms of polystyrene measured by gel permeation chromatography (GPC).

It is preferred that the binuclear metal complex should be removed from the polymer solution obtained by the process of the present invention. The removal of the binuclear metal complex from the polymer solution can be carried out by the following methods: (1) the polymer solution is let flow into a suitable column containing silica gel or alumina to adsorb the binuclear metal complex, (2) the polymer solution is washed in deaerated water, and (3) a poor solvent for the binuclear metal complex is added to the polymer solution to precipitate the binuclear metal complex and the obtained precipitate is removed by filtration.

The polymer solution obtained by the process of the present invention can be used as a composition containing other additives as required. For example, the wettability of an object to be coated by the solution can be further improved, the leveling properties of the coating film can be improved and the production of irregularities on the coating film and an orange-peel skin can be prevented by adding a small amount of a fluorine-based, silicone-based or nonionic surfactant to the polymer solution.

The polymer solution obtained by the process of the present invention can be used as a composition or photosensitive composition for forming an interlayer insulating film for use in semiconductor devices or a photoelectric converter.

### Examples

The following examples are provided for the purpose of further illustrating the present invention but are in no way to be taken as limiting.

### Synthesis Example 1 (synthesis of binuclear rhodium complex)

[Cp*Rh(µ-CH₂)Cl]₂ was first synthesized in accordance with the method described in J. Chem. Soc., Dalton Trans., 1215-1221 (1984). Stated more specifically, when the temperature of a pentane solution of [Cp*Rh(µ-CH₂)Me]₂ was adjusted to 20°C and a hydrogen chloride gas was blown into this solution to carry out a reaction at the same temperature for 3 minutes, the color of the solution became dark purple, and a reddish brown precipitate was obtained. The obtained precipitate was collected and purified by recrystallization to obtain [Cp*Rh(µ-CH₂)Cl]₂.

Then, 203 mg (0.353 mmol) of the obtained [Cp*Rh(µ-CH₂)Cl]₂ was dissolved in 20 mL of anhydrous benzene, and 64 mg of Na was added to this. When this solution was stirred for 5 hours, a white precipitate separated out, and the color of the solution changed from red to turquoise. After the precipitate was removed by filtration, the solvent was removed from the obtained solution to obtain a dark blue powder (yield of 168 mg, yield rate of 95 % (based on Rh)). The reaction formula of this reaction is as follows.

[Cp*Rh(µ-CH₂)Cl]₂ + 2Na → [Cp*Rh(µ-CH₂)]₂ + 2NaCl

The obtained dark blue powder was recrystallized with toluene to obtain a blue crystal. When ¹H-NMR, ¹³C-NMR and UV spectra (UV/vis) of this crystal were measured, it was found that this crystal was a complex represented by the above formula (4). The results of ¹H-NMR and UV spectra are given below.
¹H-NMR (400 MHz, C₆D₆) : δ1.64 (s, C₅Me₅, 30H), 9.44 (t, µ-CH₂, 4H)
¹³C-NMR (100 MHz, C₆D₆) : δ157.2, 93.5, 10.8
UV/vis (C₆H₆) : λmax = 606 nm (s = 1.02 x 10⁴ M⁻¹ cm⁻¹)

### Synthesis Example 2 (synthesis of binuclear iridium complex)

The starting material [Cp*Ir(µ-CH₂)Cl]₂ was first synthesized in the same manner as in the above Synthesis Example 1.

Then, [Cp*Ir(µ-CH₂)Cl]₂ (203 mg, 0.269 mmol) was dissolved in anhydrous benzene (20 mL) in a nitrogen atmosphere, and Na (64 mg) was added to the resulting solution. When this solution was stirred for 5 hours, a white precipitate separated out, and the color of the solution changed from reddish orange to purple. After the precipitate was removed by filtration, the solvent was removed from the obtained solution to obtain a red powder (yield of 181 mg, yield rate of 98 % (based on Ir)). The reaction formula is as follows.

[Cp*Ir(µ-CH₂)Cl]₂ + 2Na → [Cp*Ir(µ-CH₂)]₂ + 2NaCl

The obtained red powder was recrystallized with tetrahydrofuran to obtain a red crystal. It was found from the NMR and UV spectra that the obtained red crystal was a binuclear metal complex represented by the above formula (7) .
¹H NMR (400 MHz, C₆D₆) δ1.72 (s, C₅Me₅, 30H), 9.01 (s, µ-CH₂, 4H)
¹³C NMR (100 MHz, C₆D₆) : δ88.7, 88.1, 10.6
UV/vis (C₆H₆) : λmax = 474 nm (ε = 1.43 x 10⁴ M⁻¹ cm⁻¹)

### Synthesis Example 3 (synthesis of binuclear rhodium complex)

The starting material [Cp(SiMe₃)₅Rh(µ-CH₂)Cl]₂ was first synthesized in the same manner as in the above Synthesis Example 1.

Then, [Cp(SiMe₃)₅Rh(µ-CH₂)Cl]₂ (266 mg, 0.350mmol) was dissolved in anhydrous benzene (20 mL) in a nitrogen atmosphere, and Na (64 mg) was added to the resulting solution. When this solution was stirred for 5 hours, a white precipitate separated out. After the precipitate was removed by filtration, the solvent was removed from the obtained solution to obtain a powder (yield of 222 mg, yield rate of 92 % (based on Rh)). The reaction formula is as follows.

[Cp (SiMe₃) ₅Rh (µ-CH₂) Cl] ₂ + 2Na → [Cp(SiMe₃)₅Rh(µ-CH₂)]₂ + 2NaCl

It was found from the NMR and UV spectra that the obtained powder was a binuclear metal complex represented by the above formula (5).

### Synthesis Example 4 (synthesis of binuclear rhodium complex)

The starting material [Cp(Ph)Rh(µ-CH₂)Cl]₂ was first synthesized in the same manner as in the above Synthesis Example 1.

Then, [Cp(Ph)Rh(µ-CH₂)Cl]₂ (206 mg, 0.351 mmol) was dissolved in anhydrous benzene (20 mL) in a nitrogen atmosphere, and Na (64 mg) was added to the resulting solution. When this solution was stirred for 5 hours, a white precipitate separated out. After the precipitate was removed by filtration, the solvent was removed from the obtained solution to obtain a powder (yield of 170 mg, yield rate of 94 % (based on Rh)). The reaction formula is as follows.

[Cp(Ph)Rh(µ-CH₂)Cl]₂ + 2Na → [Cp(Ph)Rh(µ-CH₂)]₂ + 2NaCl

It was found from the NMR and UV spectra that the obtained powder was a binuclear metal complex represented by the above formula (6).

### Synthesis Example 5 (synthesis of phenylgermane)

10 g (39 mmol) of phenyltrichlorogermane manufactured by Azmax Co. was dissolved in 90 mL of diethyl ether in a glove box in a nitrogen atmosphere, and 3 g (79 mmol) of hydrogenated lithium aluminum was gradually added to the resulting solution over 1 hour to carry out a reaction under agitation at room temperature for 12 hours. Solid matter contained in the obtained mixture was removed by filtration, the obtained filtrate was concentrated and applied to a column chromatograph containing silica gel as a filler to be purified, and the solvent was removed under reduced pressure to obtain 4.5 g of phenylgermane.

### Example 1 (Production Example 1 of polymer)

0.3 g (2.8 mmol) of phenylsilane was dissolved in 10 g of deaerated toluene to obtain a phenylsilane solution. When 12 mg (0.023 mmol) of the binuclear rhodium complex represented by the above formula (4) obtained in the above Synthesis Example 1 was added to the obtained phenylsilane solution and stirred at 25°C and 1 atm. for 24 hours, a reddish brown solution was obtained. Then, the obtained reddish brown solution was poured into 100 mL of methanol, and a precipitated white solid polymer was collected. When infrared spectroscopy analysis, GPC analysis and ¹H-NMR analysis were made on this polymer, it was found that this polymer was polyphenylsilane.

### <infrared spectroscopy analysis>

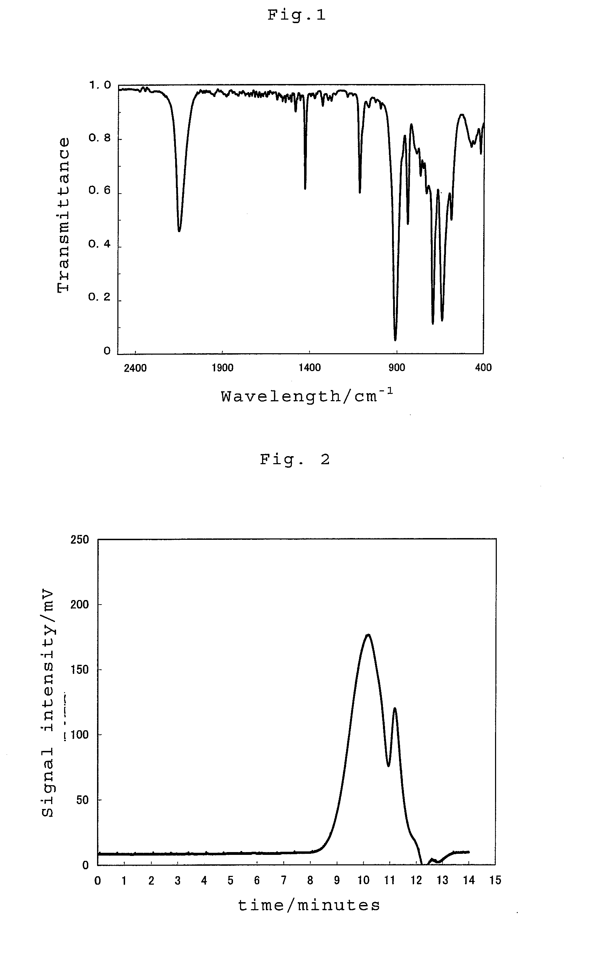

After the obtained polymer was dissolved in heavy toluene (C₇D₈), the obtained solution was applied to a KBr plate in a nitrogen atmosphere, and the solvent was removed from the solution, the IR absorption spectrum of the obtained product was measured in a glove box in a nitrogen atmosphere at 25°C. The measured IR spectral chart is shown in Fig. 1.
IR (neat): 2,108 cm⁻¹ (ν_{Si-H}), 893 cm⁻¹, 847 cm⁻¹ (ν_{Si-H})

### <GPC analysis>

The obtained polymer was dissolved in tetrahydrofuran to prepare a tetrahydrofuran solution having a concentration of the polymer of 1 mass%. When GPC analysis was made on the prepared tetrahydrofuran solution under the following conditions, it was found that the obtained polymer had a weight average molecular weight (Mw) of 1, 032 and a molecular weight distribution index (Mw/Mn) of 5.65. The measured GPC spectral chart is shown in Fig. 2.

### [measurement instrument]

The GPCMAX and TDA-302 of VISCOTEK. were brought into the glove box as a gel permeation chromatograph analyzer to carry out GPC analysis in a nitrogen gas stream at an oxygen concentration of 10 ppm or less.

### [column for gel permeation chromatography]

The TSK-GELG3000HHR, TSK-GELG2000HHR and TSK-GELG1000HHR (these columns containing a styrene-divinylbenzene copolymer having a particle diameter of 5 µm) of Tosoh Corporation were connected in series as columns for GPC analysis.

### [solvent]

Tetrahydrofuran (tetrahydrofuran for high-speed liquid chromatography manufactured by Kanto Chemical Co., Inc.) was used as a solvent for GPC analysis.

### [standard sample]

Polystyrene (TSK standard POLYSTYRENE) of Tosoh Corporation) was used.

### <¹H-NMR analysis>

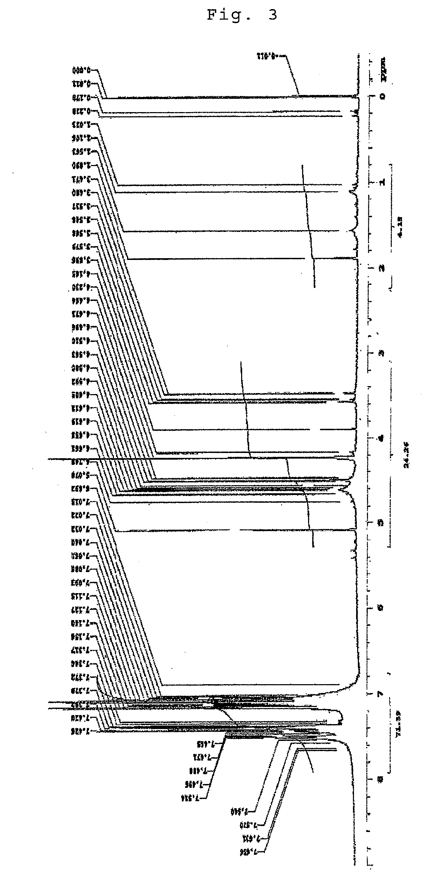

The obtained polymer was dissolved in benzene-d₆ to carry out 300 MHz ¹H-NMR analysis on the resulting solution with tetramethylsilane as an internal standard. The measured ¹H-NMR spectral chart is shown in Fig. 3. ¹H-NMR (300 MHz, C₆D₆) : δ4.23, 4.50 (4.3 - 4.9), 5.08 ppm

### Example 2 (Production Example 2 of polymer)

0.5 g (4.6 mmol) of phenylsilane was dissolved in 10 g of deaerated toluene to obtain a cyclopentasilane solution. When 68 mg (0.1 mmol) of the binuclear iridium complex represented by the above formula (7) obtained in the above Synthesis Example 2 was added to the obtained phenylsilane solution and stirred at 25°C and 1 atm. for 24 hours, a viscous solution was obtained, accompanied by the production of a hydrogen gas. Then, the obtained solution was poured into 150 mL of methanol, and a precipitated white solid polymer was collected. When ¹H-NMR analysis, infrared spectroscopy analysis and GPC analysis were made on this polymer in the same manner as in Example 1, it was found that this polymer was polyphenylsilane having a weight average molecular weight (Mw) of 600.

### Example 3 (Production Example 3 of polymer)

After 18 mg (0.036 mmol) of the binuclear rhodium complex represented by the above formula (4) obtained in the above Synthesis Example 1 was added to a solution prepared by dissolving 1 g (6.5 mmol) of phenylgermane obtained in the above Synthesis Example 3 in 10 g of deaerated toluene and stirred at 25°C and 1 atm. for 24 hours, the obtained reaction mixture was poured into 150 mL of methanol, and a white solid polymer was collected. When ¹H-NMR analysis, infrared spectroscopy analysis and GPC analysis were made on this polymer in the same manner as in Example 1, it was found that this polymer was polyphenylgermane having a weight average molecular weight (Mw) of 2,200.

### Example 4 (Production Example 4 of polymer)

After 32 mg (0.03 mmol) of the binuclear rhodium complex represented by the above formula (5) obtained in the above Synthesis Example 3 was added to a solution prepared by dissolving 0.3 g (2.8 mmol) of phenylsilane in 10 g of deaerated toluene and stirred at 25°C and 1 atm. for 24 hours, the obtained reaction mixture was poured into 100 mL of methanol, and 0.22 g of a white solid polymer was collected. When ¹H-NMR analysis, infrared spectroscopy analysis and GPC analysis were made on this polymer in the same manner as in Example 1, it was found that this polymer was polyphenylsilane having a weight average molecular weight (Mw) of 1,200.

### Example 5 (Production Example 5 of polymer)

After 17 mg (0.033 mmol) of the binuclear rhodium complex represented by the above formula (6) obtained in the above Synthesis Example 4 was added to a solution prepared by dissolving 0.3 g (2.8 mmol) of phenylsilane in 10 g of deaerated toluene and stirred at 25°C and 1 atm. for 12 hours, the obtained reaction mixture was poured into 100 mL of methanol, and 0.25 g of a white solid polymer was collected. When ¹H-NMR analysis, infrared spectroscopy analysis and GPC analysis were made on this polymer in the same manner as in Example 1, it was found that this polymer was polyphenylsilane having a weight average molecular weight (Mw) of 1, 500 and a number average molecular weight of 1,100. Effect of the Invention

According to the present invention, there is provided a process for producing a silicon polymer and a germanium polymer, wherein a reaction can be carried out even under simple and mild conditions such as room temperature and 1 atm.

## Claims

1. A polymer production process comprising reacting a compound represented by the following formula (1) in the presence of a binuclear metal complex represented by the following formula (2).
R₄₋ₙMHₙ (1)
(in the formula (1), R is a monovalent organic group, M is a silicon atom or a germanium atom, and n is 2 or 3.)
[CpM(µ-CH₂)]₂ (2)
(in the formula (2), Cp is a cyclopentadienyl-based ligand, M is a metal atom selected from Rh and Ir, and the bond between M's is a double bond.)

2. The polymer production process according to claim 1, wherein the monovalent organic group in the above formula (1) is a linear or branched aliphatic group having 1 to 10 carbon atoms, alicyclic group having 3 to 20 carbon atoms, aryl group having 6 to 20 carbon atoms, aralkyl group having 6 to 20 carbon atoms or heteroaromatic group having 5 to 20 members.

3. The polymer production process according to claim 2, wherein the monovalent organic group in the above formula (1) is an aryl group having 6 to 20 carbon atoms.

4. The polymer production process according to claim 1, wherein the cyclopentadienyl-based ligand in the above formula (2) is a cyclopentadienyl ligand or substituted cyclopentadienyl ligand represented by the following formula (3). 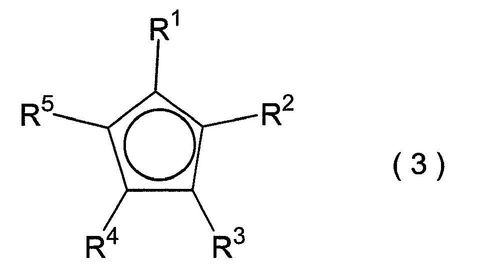 (in the formula (3), R¹, R², R³, R⁴ and R⁵ are each independently a hydrogen atom, alkyl group having 1 to 5 carbon atoms, aryl group having 6 to 14 carbon atoms, trifluoromethyl group or trialkylsilyl group having an alkyl group with 1 to 4 carbon atoms.)

5. The polysilane production process according to claim 4, wherein the binuclear metal complex represented by the above formula (2) is a complex represented by any one of the following formulas (4) to (7). 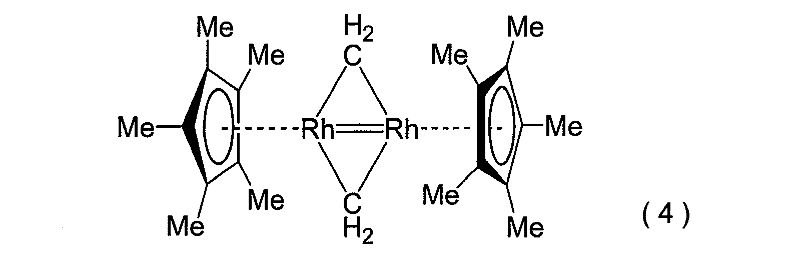 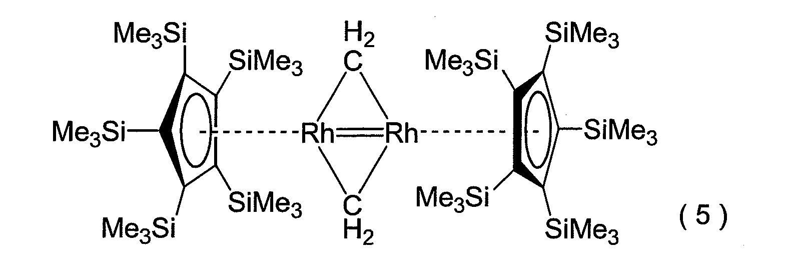 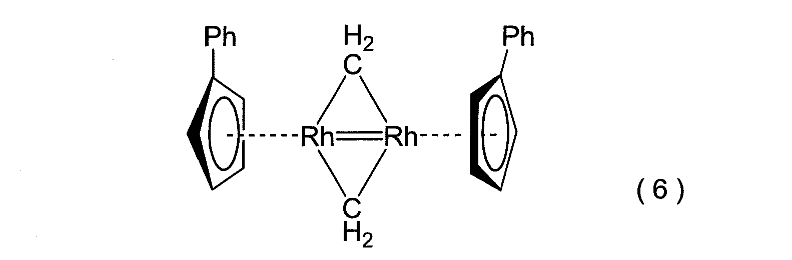 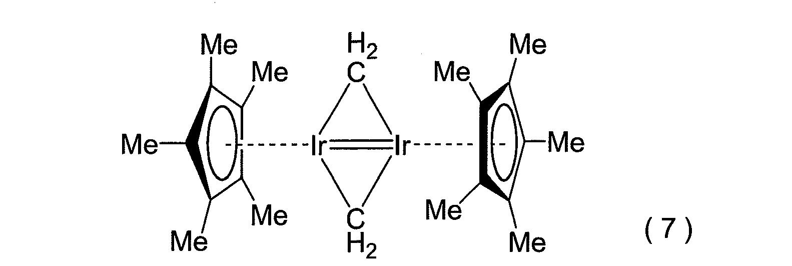 (Me in the formulas (4), (5) and (7) is a methyl group and Ph in the formula (6) is a phenyl group.)

6. The polymer production process according to any one of claims 1 to 5, wherein the binuclear metal complex represented by the above formula (2) is used in an amount of 5 x 10⁻⁴ to 5 x 10⁻¹ mol based on 1 mol of the compound represented by the above formula (1).

7. The polymer production process according to any one of claims 1 to 5, wherein the temperature for reacting the silane compound in the presence of the binuclear metal complex represented by the above formula (2) is -30 to 100°C.
